# FASCICULE DE BREVET EUROPEEN

(11) **EP 2 807 050 B1**
(45) Date de publication et mention de la délivrance du brevet: **31.08.2016**
(21) Numéro de dépôt: 13704154.7
(22) Date de dépôt: 11.01.2013
(51) Int. Cl.: B60N 2/42, B60N 2/015

(54) **AMÉLIORATION DU MONTAGE DES ASSISES DE RANG 2 POURVU D'UN SYSTEME DE RETENUE**
VERBESSERTE BEFESTIGUNG FÜR RÜCKSITZRAHMEN MIT EINEM HALTESYSTEM
IMPROVED MOUNTING OF REAR SEAT BASES PROVIDED WITH A HOLDING SYSTEM

(30) Priorité: 24.01.2012 FR 1250655
(43) Date de publication de la demande: 03.12.2014
(73) Titulaire: PSA Peugeot Citroën Automobiles S.A., 78140 Velizy Villacoublay (FR)
(72) Inventeur: DENOEUD, Jean Francois, 75020 Paris (FR); LASSALLE, Olivier, 92000 Nanterre (FR); GUILBAUT, Marc, 94140 Alfortville (FR)
(74) Mandataire: Fosse, Danièle
(86) Numéro de dépôt international: PCT/FR2013/050073
(87) Numéro de publication internationale: WO 2013/110874

(56) Documents cités:
- EP-A1- 2 123 505
- EP-A2- 1 795 392

## Description

La présente invention concerne le domaine général des fixations de sièges de véhicules, et plus particulièrement des systèmes de retenue anti-sous-marinage, qui peuvent être employés pour arrimer efficacement les sièges de véhicules de toutes sortes, notamment automobiles, et plus particulièrement les sièges arrières (dits « de rang 2 »), à l'encontre du glissement inertiel que tendent à subir les assises desdits sièges en cas de décélération rapide ou de choc frontal.

On connaît par exemple, par le document US-2 789 621, des systèmes de retenue de sièges mettant en oeuvre des crochets fixés au plancher du véhicule, au niveau du rebord avant de la banquette, et autour desquels viennent en prise des organes de fixation, du genre boucles métalliques, eux-mêmes solidaires de l'assise.

Si un tel assemblage permet effectivement d'offrir un butoir s'opposant au sous-marinage de l'assise, il peut toutefois présenter certains inconvénients.

En effet, l'enclenchement d'un tel mécanisme de retenue nécessite une mise en place de l'assise selon une cinématique verticale, c'est-à-dire selon un mouvement de rabattement vertical descendant, que l'on réalise après avoir engagé, approximativement, l'arrière de l'assise dans le creux du plancher, sous le dossier.

Or, une telle manipulation s'effectue en aveugle, le monteur ne pouvant pas contrôler efficacement le positionnement des organes de fixation de l'assise par rapport aux crochets, puisque ces derniers sont cachés par ladite assise.

Ceci peut rendre le montage malaisé, voire risqué pour le monteur, en particulier s'il tend à glisser ses doigts entre le dessous de l'assise et le plancher pour rechercher la position d'enclenchement à tâtons avant que ladite assise ne soit complètement rabattue, ce qui l'expose à un pincement voire un écrasement des doigts.

De surcroît, un mauvais positionnement relatif des éléments de fixation peut conduire à une détérioration du mécanisme, si celui-ci est forcé, ou bien à un mauvais enclenchement, ce qui est bien entendu préjudiciable au confort et à la sécurité des occupants du véhicule.

Enfin, la mise en place verticale requiert un important espace de dégagement, nécessaire au débattement de l'assise, à l'aplomb des crochets de retenue, ce qui impose de placer lesdits crochets vers l'avant de la banquette et rend par conséquent cette technique inadaptée à la fixation de certaines banquettes modernes, et notamment de certaines banquettes fractionnables/rabattables (par exemple de type 1/3-2/3) pour lesquelles il peut être nécessaire d'assurer un arrimage en partie arrière de l'assise, à proximité du dossier.

Un objet assigné à l'invention vise par conséquent à remédier aux inconvénients susmentionnés et à proposer un nouveau dispositif de retenue pour siège de véhicule, ainsi qu'un nouveau procédé d'assemblage de siège de véhicule qui, tout en offrant un arrimage efficace et sûr de l'assise, facilitent et sécurisent le montage de cette dernière.

Un autre objet assigné à l'invention vise également à proposer un nouveau dispositif de retenue et un nouveau procédé d'assemblage qui soient particulièrement polyvalents et susceptibles d'être adaptés à de nombreux types de sièges et configurations d'assemblage.

Un autre objet assigné à l'invention vise également à proposer un nouveau dispositif de retenue qui soit particulièrement simple et peu onéreux à fabriquer et à mettre en oeuvre.

Les objets assignés à l'invention sont atteints à l'aide d'un dispositif de retenue pour siège de véhicule, ledit dispositif comprenant au moins une embase permettant sa fixation sur la carrosserie du véhicule, ainsi qu'un crochet d'arrêt agencé en saillie sur ladite embase de sorte à pouvoir offrir une prise à un organe d'arrimage solidaire de l'assise dudit siège et ainsi faire obstacle au glissement accidentel de ladite assise vers l'avant, ledit dispositif de retenue étant caractérisé en ce qu'il comprend une rampe d'insertion inclinée conçue pour recevoir et guider l'organe d'arrimage lorsque l'assise est poussée de l'avant vers l'arrière pour être mise en place, en provoquant, par réaction à la composante horizontale, orientée de l'avant vers l'arrière, de l'effort d'appui qu'exerce sur ladite rampe l'organe d'arrimage sous l'effet de la poussée d'insertion de ladite assise, un déplacement vertical progressif dudit organe d'arrimage qui est suffisant pour permettre audit organe d'arrimage de contourner le crochet puis de venir se placer derrière ledit crochet, en vis-à-vis de la gorge de ce dernier, par encliquetage.

Les objets assignés à l'invention sont également atteints à l'aide d'un procédé d'assemblage d'un siège de véhicule sur la carrosserie dudit véhicule, au cours duquel on place un organe d'arrimage solidaire de l'assise dudit siège en vis-à-vis d'un crochet d'arrêt préalablement fixé à la carrosserie du véhicule, de manière à ce que ledit crochet fasse obstacle au glissement accidentel de ladite assise vers l'avant, ledit procédé étant caractérisé en ce qu'il comprend une étape (a) de pré-positionnement au cours de laquelle on place l'assise du siège sur le plancher du véhicule, de manière à positionner l'organe d'arrimage de l'assise au contact du départ d'une rampe d'insertion inclinée précédant le crochet dans le sens avant/arrière, puis une étape (b) d'insertion guidée au cours de laquelle on exerce une poussée d'insertion sur l'assise selon au moins une composante horizontale orientée d'avant en arrière, de telle manière que ladite composante horizontale provoque simultanément d'une part la progression longitudinale de l'assise d'avant en arrière et, d'autre part, par conversion de mouvement au contact de la rampe d'insertion, le déplacement vertical progressif de l'organe d'arrimage le long de ladite rampe, selon une amplitude suffisante pour que ledit organe d'arrimage franchisse le crochet puis quitte ladite rampe d'insertion, en opérant ainsi un décrochement qui l'amène à se placer derrière ledit crochet, en vis-à-vis de la gorge de ce dernier, par encliquetage.

Avantageusement, le dispositif et le procédé conformes à l'invention permettent de mettre en oeuvre une cinématique d'assemblage plutôt horizontale, laquelle permet notamment d'insérer l'assise sous le dossier selon un geste intuitif et simple de poussée, et ce même pour des banquettes présentant dans des configurations assez particulières ou dans un espace de manoeuvre relativement exigu, notamment lorsqu'il s'agit d'insérer l'assise sous un dossier déjà installé.

En outre, la manoeuvre d'insertion est avantageusement assistée, de manière simple, automatique et passive, grâce à une ou plusieurs rampes d'insertion idoines, dont la forme et les dimensions assurent la fluidité du déplacement et la correction de la trajectoire de placement de l'organe d'arrimage par rapport au crochet, de telle sorte que, même exécutée à l'aveugle, sans contrôle visuel des éléments de fixation, l'opération est parfaitement précise et reproductible, et aboutit systématiquement à un arrimage stable et sûr de l'assise.

D'autres objets, caractéristiques et avantages de l'invention apparaîtront plus en détail à la lecture de la description qui suit, ainsi qu'à l'aide des dessins annexés, fournis à titre purement illustratif et non limitatif, parmi lesquels :
La figure 1 illustre, selon une vue latérale en coupe, la mise en oeuvre d'un dispositif de retenue conforme à l'invention pour la fixation d'un siège de véhicule.
La figure 2 illustre, selon une vue en perspective, une variante de réalisation du dispositif de retenue mis en oeuvre sur la figure 1.
La figure 3 illustre, selon une vue en projection de côté, le dispositif de retenue représenté sur la figure 2.
Les figures 4, 5 et 6 illustrent, selon des vues de détail en coupe latérale, le détail de fonctionnement du dispositif de retenue conforme à l'invention lors de différentes étapes successives de mise en place de l'assise sous le dossier du siège représenté sur la figure 1.

La présente invention se rapporte à un dispositif de retenue 1 anti-sous-marinage destiné à équiper un véhicule 2 quelconque, et notamment un véhicule automobile, pour retenir un ou plusieurs des sièges 3 dudit véhicule à l'encontre du glissement inertiel que pourrait provoquer un brusque changement de l'allure dudit véhicule, et notamment une forte décélération due par exemple à un choc frontal.

Elle concerne bien entendu en tant que tel un véhicule 2 dont au moins l'un des sièges 3, et plus particulièrement au moins l'un des sièges de rang deux ou de rang supérieur, est retenu par un tel dispositif.

Par convention et par simple commodité de description, on considérera dans ce qui suit, sans que cela ne constitue une restriction de l'invention, que le véhicule 2 repose sur un sol plan horizontal et que le ou les sièges 3 retenus par le dispositif 1 objet de l'invention sont orientés dans le sens principal de la marche, sensiblement en direction de l'avant AV (situé à droite sur les figures) selon l'axe longitudinal (XX') avant-arrière du véhicule.

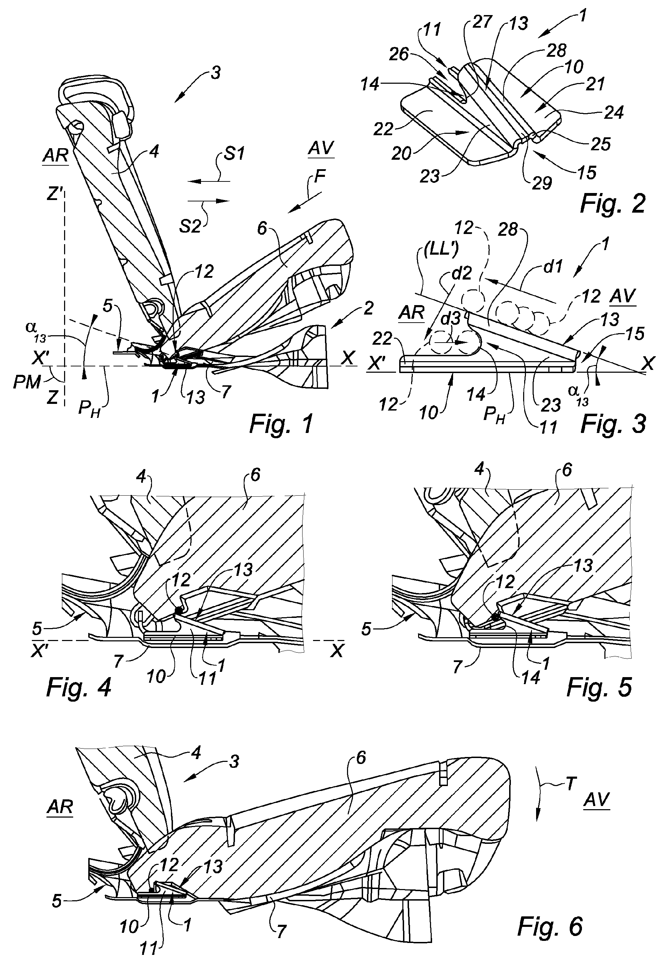

De manière classique, le siège 3 comprendra un dossier 4, fixé à la carrosserie 5 du véhicule, vers l'arrière AR, ainsi qu'une assise 6 dont l'extrémité arrière vient de préférence s'insérer entre la base inférieure du dossier 4 et le plancher 7 du véhicule qui la soutient, tel que cela est notamment illustré sur les figures 1 et 6.

Le dispositif de retenue 1 comprend, tel que cela est notamment visible sur les figures 2 et 3, au moins une embase 10 permettant sa fixation sur la carrosserie du véhicule, ainsi qu'un crochet d'arrêt 11 agencé en saillie sur ladite embase 10 de sorte à pouvoir offrir une prise à un organe d'arrimage 12 solidaire de l'assise 6 et ainsi faire obstacle au glissement accidentel de ladite assise vers l'avant AV.

De préférence, l'organe d'arrimage 12 est formé par un fil d'armature de l'assise 6, tel qu'un fil métallique de section circulaire, ce qui permet une réalisation simple et compacte qui assure néanmoins un arrimage robuste. Par commodité, il pourra donc être assimilé à un fil dans ce qui suit.

Selon l'invention, le dispositif de retenue 1 comprend une rampe d'insertion 13 inclinée conçue pour recevoir et guider l'organe d'arrimage 12 lorsque l'assise 6 est poussée de l'avant AV vers l'arrière AR pour être mise en place, en provoquant, par réaction à la composante horizontale, orientée de l'avant vers l'arrière, de l'effort d'appui qu'exerce sur ladite rampe l'organe d'arrimage sous l'effet de la poussée d'insertion (F) de ladite assise, un déplacement vertical progressif dudit organe d'arrimage 12 qui est suffisant pour permettre audit organe d'arrimage 12 de contourner le crochet 11 puis de venir se placer derrière ledit crochet, en vis-à-vis de la gorge 14 de ce dernier, par encliquetage.

Avantageusement, le dispositif 1 associe ainsi à un crochet 11 rigide, en amont de ce dernier, une rampe 13 formant un coin d'insertion dont l'épaisseur croît du sommet 15 dudit coin, orienté vers l'avant et de préférence proche du plancher 7, jusqu'à dépasser la hauteur d'ouverture du crochet, dans une zone de décrochement située vers l'arrière, longitudinalement au-delà de la gorge 14 dudit crochet.

Le dispositif 1 peut ainsi former un rochet définissant d'une part un sens passant S1, orienté de l'avant AV vers l'arrière AR, selon lequel la conformation et l'orientation de la rampe 13 autorisent et guident le libre glissement longitudinal du fil d'arrimage 12, et plus globalement de l'assise 6 dans son ensemble, et provoquent concomitamment la déviation verticale progressive de ces éléments par rapport au plancher 7, et plus particulièrement par rapport au crochet 11, et d'autre part un sens bloquant S2 opposé, selon lequel le crochet 11 forme à l'encontre du fil d'arrimage 12 une butée infranchissable qui limite, voire interdit, tout déplacement de l'assise 6 vers l'avant AV.

Selon une caractéristique préférentielle, la rampe d'insertion 13 présente, d'avant en arrière et par rapport à l'horizontale P_{H}, et plus préférentiellement par rapport au plan de fixation que définit l'embase 10, une inclinaison α₁₃ non nulle, dont la valeur maximale, sur le tronçon destiné à être parcouru par l'organe d'arrimage lors de la mise en place de l'assise, est inférieure ou égale à 40 degrés, et de préférence inférieure ou égale à 30 degrés.

Plus particulièrement, tel que cela est illustré notamment sur les figures 1 et 3, ladite inclinaison pourra être sensiblement comprise entre 15 degrés et 30 degrés, et notamment voisine de 20 à 25 degrés.

Géométriquement, la tangente au tracé de la rampe, considéré longitudinalement en projection dans le plan médian P_{M} du dispositif 1 ou même du véhicule 2, ne présente pas, vis-à-vis de la direction de la poussée F de l'assise 6, de composante transverse excessive, c'est-à-dire que la rampe 13 est avantageusement dépourvue d'éléments saillants ou d'aspérités qui seraient susceptibles de former un épaulement à même de bloquer le libre glissement de l'organe d'arrimage le long de ladite rampe. La douceur de la pente permet ainsi une mise en place de l'assise 6 sans heurt ni résistance excessive au geste de montage, en particulier dans une cinématique d'approche sensiblement horizontale.

Par ailleurs, le dispositif, et plus particulièrement la rampe 13 qui précède le crochet 11, est de préférence plus profond (selon l'axe longitudinal (XX')) que haut (selon l'axe vertical (ZZ')), ce qui lui permet de présenter, en sus d'une pente d'insertion douce, une bonne rigidité structurelle, une grande robustesse et notamment une bonne tenue au cisaillement et à l'arrachement, ce qui renforce la sécurité de l'arrimage, ainsi qu'une indéniable compacité, ce qui facilite son utilisation dans des espaces exigus.

A ce titre, il est remarquable que, de façon particulièrement préférentielle, le dossier 4 est fixé à la carrosserie 5 du véhicule 2 de sorte à ménager, dans le prolongement dudit dossier, entre la base de ce dernier et le plancher 7 du véhicule, un interstice d'assemblage dans lequel la portion arrière de l'assise 6 est destinée à venir se loger, la rampe d'insertion 13 pouvant alors avantageusement être disposée au moins en partie à l'aplomb du dossier, dans ledit interstice d'assemblage, tel que cela est notamment visible sur les figures 1, 4, 5 et 6.

Au demeurant, l'organe d'arrimage 12, et plus particulièrement le fil d'armature, est préférentiellement situé dans la portion arrière de l'assise 6, notamment dans la moitié arrière, le quart arrière, voire sensiblement à l'extrémité arrière de celle-ci.

Le dispositif 1 permettant d'opérer une fixation à l'arrière de l'assise, à proximité du dossier 4, voire sous ce dernier, l'invention autorise donc un montage compact à cinématique horizontale, particulièrement adapté lorsque l'assise doit être enfilée sous un dossier déjà en place.

En outre, une prise en bout arrière de l'assise garantit un excellent comportement dynamique de retenue de celle-ci à l'encontre du sous-marinage.

Ensuite, une telle configuration est parfaitement compatible avec l'arrimage de nombreux types de sièges, et en particulier aussi bien de sièges anciens, fixes, que de sièges plus récents possédant un dossier rabattable, susceptible d'être basculé à plat vers l'avant, et/ou de sièges de banquettes fractionnables, notamment de type 1/3-2/3.

Par ailleurs, le dispositif de retenue 1 sera de préférence, fixé sur le plancher 7 du véhicule de telle sorte que la rampe d'insertion 13 est placée en saillie ascendante de l'avant vers l'arrière, ladite rampe pointant ainsi en quelque sorte vers la base du dossier 4, en s'éloignant du plancher 7 et en créant localement un rétrécissement progressif, d'avant en arrière, de l'interstice d'assemblage.

Bien entendu, la rampe 13 n'est nullement limitée à une forme particulière, dès lors que sa conformation lui permet d'assurer sa fonction de guidage. En particulier, il n'est pas exclu que le profil longitudinal de ladite rampe puisse être légèrement bombé vers l'extérieur, de sorte à présenter une forme globalement convexe.

Il pourra par ailleurs, quelle que soit sa courbure globale, être formé éventuellement d'une succession de segments de droite ou bien encore de portions incurvées, aucune ne dépassant toutefois l'inclinaison maximale énoncée plus haut.

Toutefois, selon une caractéristique préférentielle de l'invention, la rampe d'insertion 13 suivra, d'avant en arrière, sur la longueur du tronçon de contact sur lequel est amené à évoluer le fil d'arrimage 12, une génératrice (LL') sensiblement rectiligne.

Un tel agencement permet d'une part d'obtenir une inclinaison sensiblement constante et donc une progression très régulière de l'assise sous l'effort de poussée F, et d'autre part de simplifier considérablement la fabrication du dispositif 1.

Selon une variante de réalisation préférentielle, correspondant notamment aux figures 2 et 3, le dispositif 1 présente une forme sensiblement symétrique comprenant deux équerres 20, 21 distantes l'une de l'autre, disposées de part et d'autre de son plan sagittal, et pourvues chacune d'une première branche 22, 24, de préférence sensiblement plane, formant semelle de fixation et d'une seconde branche 23, 25 sécante à la première et formant montant, les montants 23, 25 présentant une forme biseautée dont le sommet 15 se situe vers l'avant AV et la base large 26 vers l'arrière, ladite base 26 présentant une découpe rentrante 27 formant la gorge 14 du crochet d'arrêt 11, lesdites équerres 20, 21 étant reliées l'une à l'autre par une traverse 28 qui s'étend au moins le long de la portion biseautée, en coiffant les chants supérieurs des montants, de sorte à créer entre ces dernier un pont incliné formant, ici par sa face externe supérieure, la rampe d'insertion 13.

Les bords de la traverse 28 pourront avantageusement être recourbés, à la manière d'une gouttière renversée, ladite traverse formant ainsi un plan incliné sensiblement lisse, facile à franchir, aux contours non agressifs à l'encontre du fil d'arrimage 12.

Avantageusement, la traverse 28 peut être pourvue d'un organe raidisseur, tel qu'une nervure longitudinale 29.

De façon particulièrement préférentielle, le dispositif 1 est formé d'une pièce monobloc, qui pourra par exemple être obtenue par estampage. On peut ainsi fabriquer simplement et à moindre coût, notamment en limitant les découpes de matière, une pièce fonctionnelle et robuste.

Bien entendu, l'invention concerne également en tant que tel un procédé d'assemblage d'un siège 3 de véhicule sur la carrosserie 5 dudit véhicule, au cours duquel on place un organe d'arrimage 12 solidaire de l'assise 6 dudit siège en vis-à-vis d'un crochet d'arrêt 11 préalablement fixé à ladite carrosserie, de manière à ce que ledit crochet fasse obstacle au glissement accidentel de ladite assise vers l'avant.

Selon l'invention, ledit procédé comprend une étape (a) de pré-positionnement au cours de laquelle le monteur place l'assise du siège, et plus particulièrement la portion inférieure arrière de celle-ci, sur le plancher 7, de préférence le plancher arrière, du véhicule, de manière à positionner l'organe d'arrimage 12 de l'assise au contact du départ d'une rampe d'insertion 13 inclinée précédant le crochet dans le sens avant/arrière, par exemple un tronçon proche du sommet 15 du coin sur la figure 3, puis une étape (b) d'insertion guidée au cours de laquelle on exerce une poussée d'insertion F sur l'assise 6 selon au moins une composante horizontale orientée d'avant AV en arrière AR, de telle manière que ladite composante horizontale provoque simultanément d'une part la progression longitudinale de l'assise d'avant en arrière et, d'autre part, par conversion de mouvement au contact de la rampe d'insertion, le déplacement vertical progressif de l'organe d'arrimage le long de ladite rampe 13, selon une amplitude suffisante pour que ledit organe d'arrimage franchisse le crochet puis quitte ladite rampe d'insertion, en opérant ainsi un décrochement qui l'amène à se placer derrière ledit crochet, en vis-à-vis de la gorge 14 de ce dernier, par encliquetage.

Plus particulièrement, on peut ainsi obtenir, sous l'effet de la poussée F, de préférence à composante horizontale majoritaire sinon exclusive, un premier déplacement d1 (figure 3) selon lequel le fil d'arrimage 12, et plus globalement l'assise 6, s'enfonce d'avant en arrière le long de la rampe 13 tout en s'élevant jusqu'à atteindre, au niveau de la base large 26, une position surplombant le crochet 11 (figure 4), position surélevée depuis laquelle ladite assise, et plus particulièrement son fil d'arrimage 12, retombe ensuite (figure 5), selon un second déplacement d2, contre la hampe dudit crochet qu'elle vient de franchir par le dessus, pour venir reposer sensiblement à l'altitude de la gorge 14 dudit crochet, de préférence légèrement au-delà de celle-ci, en retrait vers l'arrière (figure 6).

La mise en place de l'assise est ensuite achevée, de manière avantageusement réversible, en basculant T le bord antérieur de ladite assise pour le rabattre verticalement contre le plancher 7 (figure 6).

En cas de choc frontal, l'assise 6, et par conséquent le fil d'arrimage 12, peuvent être légèrement emportés vers l'avant, mais seulement selon un bref troisième déplacement longitudinal d3 de faible amplitude (figure 3), qui s'achève dès lors que le fil d'arrimage 12 vient buter dans le creux de la gorge 14, en bloquant le mouvement de sous-marinage dans le sens S2.

## Revendications

1. Dispositif de retenue (1) pour siège (3) de véhicule (2), ledit dispositif comprenant au moins une embase (10) permettant sa fixation sur la carrosserie (5) du véhicule, ainsi qu'un crochet d'arrêt (11) agencé en saillie sur ladite embase (10) de sorte à pouvoir offrir une prise à un organe d'arrimage (12) solidaire de l'assise (6) dudit siège (3) et ainsi faire obstacle au glissement accidentel de ladite assise vers l'avant (AV), ledit dispositif de retenue étant **caractérisé en ce qu'**il comprend une rampe d'insertion (13) inclinée conçue pour recevoir et guider l'organe d'arrimage (12) lorsque l'assise (6) est poussée de l'avant (AV) vers l'arrière (AR) pour être mise en place, en provoquant, par réaction à la composante horizontale, orientée de l'avant vers l'arrière, de l'effort d'appui qu'exerce sur ladite rampe l'organe d'arrimage sous l'effet de la poussée d'insertion (F) de ladite assise, un déplacement vertical progressif dudit organe d'arrimage qui est suffisant pour permettre audit organe d'arrimage de contourner le crochet (11) puis de venir se placer derrière ledit crochet, en vis-à-vis de la gorge (14) de ce dernier, par encliquetage.

2. Dispositif de retenue selon la revendication 1 **caractérisé en ce que** la rampe d'insertion (13) présente, d'avant en arrière et par rapport à l'horizontale, une inclinaison (α₁₃) non nulle, dont la valeur maximale, sur le tronçon destiné à être parcouru par l'organe d'arrimage lors de la mise en place de l'assise, est inférieure ou égale à 40 degrés, et de préférence inférieure ou égale à 30 degrés.

3. Dispositif de retenue selon la revendication 1 ou 2 **caractérisé en ce que** la rampe d'insertion (13) suit, d'avant en arrière, une génératrice (LL') sensiblement rectiligne.

4. Dispositif de retenue selon l'une des revendications précédentes **caractérisé en ce qu'**il présente une forme sensiblement symétrique comprenant deux équerres (20, 21) distantes disposées de part et d'autre de son plan sagittal et pourvues chacune d'une première branche (22, 24) formant semelle de fixation et d'une seconde branche (23, 25) sécante à la première et formant montant, les montants (23, 25) présentant une forme biseautée dont le sommet (15) se situe vers l'avant et la base large (26) vers l'arrière, ladite base présentant une découpe rentrante (27) formant la gorge (14) du crochet d'arrêt (11), lesdites équerres étant reliées l'une à l'autre par une traverse (28) qui s'étend au moins le long de la portion biseautée, en coiffant les chants supérieurs des montants, de sorte à créer entre ces dernier un pont incliné formant la rampe d'insertion (13).

5. Dispositif de retenue selon l'une des revendications précédentes **caractérisé en ce qu'**il est formé d'une pièce monobloc obtenue par estampage.

6. Véhicule (2) **caractérisé en ce qu'**au moins l'un de ses sièges (3) est retenu par un dispositif de retenue selon l'une des revendications 1 à 5.

7. Véhicule selon la revendication 6 **caractérisé en ce que** le siège (3) retenu par le dispositif de retenue (1) comprend un dossier (4) qui est fixé à la carrosserie (5) du véhicule de sorte à ménager, dans le prolongement dudit dossier, entre la base de ce dernier et le plancher (7) du véhicule, un interstice d'assemblage dans lequel la portion arrière de l'assise (6) est destinée à venir se loger, et **en ce que** la rampe d'insertion est disposée au moins en partie à l'aplomb du dossier, dans ledit interstice d'assemblage.

8. Véhicule selon la revendication 6 ou 7 **caractérisé en ce que** le dispositif de retenue (1) est fixé sur le plancher (7) dudit véhicule de telle sorte que la rampe d'insertion (13) est placée en saillie ascendante de l'avant vers l'arrière.

9. Véhicule selon l'une des revendications 6 à 8 **caractérisé en ce que** l'organe d'arrimage (12) est formé par un fil d'armature de l'assise (6) situé dans la portion arrière de cette dernière.

10. Procédé d'assemblage d'un siège de véhicule sur la carrosserie dudit véhicule, au cours duquel on place un organe d'arrimage (12) solidaire de l'assise (6) dudit siège en vis-à-vis d'un crochet d'arrêt (11) préalablement fixé à la carrosserie du véhicule, de manière à ce que ledit crochet fasse obstacle au glissement accidentel de ladite assise vers l'avant, ledit procédé étant **caractérisé en ce qu'**il comprend une étape (a) de pré-positionnement au cours de laquelle on place l'assise du siège sur le plancher du véhicule, de manière à positionner l'organe d'arrimage de l'assise au contact du départ d'une rampe d'insertion (13) inclinée précédant le crochet dans le sens avant/arrière, puis une étape (b) d'insertion guidée au cours de laquelle on exerce une poussée d'insertion sur l'assise selon au moins une composante horizontale orientée d'avant en arrière, de telle manière que ladite composante horizontale provoque simultanément d'une part la progression longitudinale de l'assise d'avant en arrière et, d'autre part, par conversion de mouvement au contact de la rampe d'insertion, le déplacement vertical progressif de l'organe d'arrimage le long de ladite rampe, selon une amplitude suffisante pour que ledit organe d'arrimage franchisse le crochet puis quitte ladite rampe d'insertion, en opérant ainsi un décrochement qui l'amène à se placer derrière ledit crochet, en vis-à-vis de la gorge (14) de ce dernier, par encliquetage.

## Patentansprüche

1. Rückhaltevorrichtung (1) für einen Sitz (3) eines Fahrzeugs (2), wobei die Vorrichtung mindestens eine Grundplatte (10) umfasst, die ihre Befestigung an der Karosserie (5) des Fahrzeugs ermöglicht, sowie einen Anschlaghaken (11), der vorspringend an der Grundplatte (10) angebracht ist, um einem Koppelungselement (12), das mit dem Sitzteil (6) des Sitzes (3) fest verbunden ist, eine Aufnahme bieten zu können und so ein versehentliches Gleiten des Sitzteils nach vorne (AV) zu verhindern, wobei die Rückhaltevorrichtung **dadurch gekennzeichnet ist, dass** die eine schräge Einführrampe (13) umfasst, die ausgelegt ist, um das Koppelungselement (12) aufzunehmen und zu führen, wenn der Sitzteil (6) von vorne (AV) nach hinten (AR) gedrückt wird, um eingerichtet zu werden, indem durch die Reaktion auf die von vorne nach hinten ausgerichtete, horizontale Komponente der Anpresskraft, welche auf die Rampe vom Koppelungselement unter der Wirkung des Einführschubs (F) des Sitzteils ausgeübt wird, eine progressive vertikale Verschiebung des Koppelungselements hervorgerufen wird, die ausreichend ist, um es dem Koppelungselement zu ermöglichen, den Haken (11) zu umgehen und sich dann hinter dem Haken, gegenüber der Ausnehmung (14) von diesem, durch Einrasten anzuordnen.

2. Rückhaltevorrichtung nach Anspruch 1, **dadurch gekennzeichnet, dass** die Einführrampe (13) von vorne nach hinten und in Bezug auf die Horizontale eine Neigung (α₁₃) von nicht null aufweist, deren Maximalwert auf dem Abschnitt, der dazu bestimmt ist, vom Koppelungselement beim Einrichten des Sitzteils durchlaufen zu werden, kleiner oder gleich 40 Grad beträgt, und vorzugsweise kleiner oder gleich 30 Grad.

3. Rückhaltevorrichtung nach Anspruch 1 oder 2, **dadurch gekennzeichnet, dass** die Einführrampe (13) von vorne nach hinten einer im Wesentlichen geradlinigen Erzeugenden (LL') folgt.

4. Rückhaltevorrichtung nach einem der vorhergehenden Ansprüche, **dadurch gekennzeichnet, dass** sie eine im Wesentlichen symmetrische Form aufweist, umfassend zwei beabstandete Winkel (20, 21), die auf jeder Seite ihrer Sagittalebene angeordnet und jeweils mit einem ersten Schenkel (22, 24), der eine Befestigungssohle bildet, und einem zweiten Schenkel (23, 25) ausgestattet sind, der den Ersten schneidet und eine Stütze bildet, wobei die Stützen (23, 25) eine abgeschrägte Form aufweisen, deren Spitze (15) nach vorne und deren breite Basis (26) nach hinten angeordnet ist, wobei die Basis einen Einschnitt (27) aufweist, der eine Ausnehmung (14) des Anschlaghakens (11) bildet, wobei die Winkel durch eine Traverse (28) miteinander verbunden sind, die sich mindestens entlang des abgeschrägten Abschnitts erstreckt, indem sie die Oberkanten der Stützen bedeckt, um zwischen Letzteren eine schräge Brücke zu erzeugen, welche die Einführrampe (13) bildet.

5. Rückhaltevorrichtung nach einem der vorhergehenden Ansprüche, **dadurch gekennzeichnet, dass** sie aus einem Stück gebildet ist, das man durch Stanzen erhält.

6. Fahrzeug (2), **dadurch gekennzeichnet, dass** mindestens einer der Sitze (3) von einer Rückhaltevorrichtung nach einem der Ansprüche 1 bis 5 zurückgehalten wird.

7. Fahrzeug nach Anspruch 6, **dadurch gekennzeichnet, dass** der Sitz (3), der von der Rückhaltevorrichtung (1) zurückgehalten wird, eine Rückenlehne (4) umfasst, die an der Karosserie (5) des Fahrzeugs befestigt ist, um in der Verlängerung der Rückenlehne, zwischen der Basis von dieser und dem Boden (7) des Fahrzeugs, einen Montagespalt zu bilden, in dem der hintere Abschnitt des Sitzteils (6) aufgenommen werden soll, und dadurch, dass die Einführrampe mindestens teilweise lotrecht von der Rückenlehne im Montagespalt angeordnet ist.

8. Fahrzeug nach Anspruch 6 oder 7, **dadurch gekennzeichnet, dass** die Rückhaltevorrichtung (1) am Boden (7) des Fahrzeugs befestigt ist, so dass die Einführrampe (13) vorspringend, von vorne nach hinten ansteigend angeordnet ist.

9. Fahrzeug nach einem der Ansprüche 6 bis 8, **dadurch gekennzeichnet, dass** das Koppelungselement (12) von einem Armierungsdraht des Sitzteils (6) gebildet wird, der sich im hinteren Abschnitt von diesem befindet.

10. Verfahren zur Montage eines Fahrzeugsitzes an der Karosserie des Fahrzeugs, bei dem ein Koppelungselement (12), das mit dem Sitzteil (6) des Sitzes fest verbunden ist, gegenüber einem Anschlaghaken (11) angeordnet wird, der im Vorhinein an der Karosserie des Fahrzeugs befestigt wird, so dass der Haken ein versehentliches Gleiten des Sitzteils nach vorne verhindert, wobei das Verfahren **dadurch gekennzeichnet ist, dass** es einen Schritt (a) des Vorpositionierens umfasst, bei dem der Sitzteil des Sitzes am Boden des Fahrzeugs angeordnet wird, um das Koppelungselement des Sitzteils in Kontakt mit dem Anfang einer schrägen Einführrampe (13) zu positionieren, die dem Haken in die vordere/hintere Richtung vorhergeht, dann einen Schritt (b) des geführten Einführens, bei dem ein Einführschub auf den Sitzteil gemäß mindestens einer von vorne nach hinten ausgerichteten, horizontalen Komponente ausgeübt wird, so dass die horizontale Komponente gleichzeitig einerseits die Längsprogression des Sitzteils von vorne nach hinten und andererseits, durch Bewegungsumwandlung beim Kontakt der Einführrampe, die progressive vertikale Verschiebung des Koppelungselements entlang der Rampe hervorruft, gemäß einer Amplitude, die ausreichend ist, damit das Koppelungselement den Haken passiert und dann die Einführrampe verlässt, indem so ein Aushaken ausgeführt wird, das es dazu bringt, sich hinter dem Haken, gegenüber der Ausnehmung (14) von diesem, durch Einrasten anzuordnen.

## Claims

1. Retaining device (1) for a seat (3) of a vehicle (2), said device comprising at least one base (10) for fixing it to the bodywork (5) of the vehicle, as well as a stop hook (11) arranged projecting on said base (10) so as to be able to offer a grip for an anchoring member (12) secured to the squab (6) of said seat (3) and thus form an obstacle to the accidental sliding of said squab towards the front (AV), said retaining device being **characterised in that** it comprises an inclined insertion ramp (13) designed so as to receive and guide the anchoring member (12) when the squab (6) is pushed from the front (AV) towards the rear (AR) in order to be put in place, causing, by reaction to the horizontal component, oriented from front to rear, of the abutment force that the anchoring member exerts on said ramp under the effect of the insertion thrust (F) of said squab, a progressive vertical movement of said anchoring member that is sufficient to enable said anchoring member to pass round the hook (11) and then to come to be placed behind said hook, facing the groove (14) in the latter, by snapping in.

2. Retaining device according to claim 1, **characterised in that** the insertion ramp (13) has, from front to rear and with respect to the horizontal, a non-zero inclination (α₁₃), the maximum value of which, on the portion intended to have the anchoring member pass through it when the squab is positioned, is less than or equal to 40 degrees, and preferably less than or equal to 30 degrees.

3. Retaining device according to claim 1 or 2, **characterised in that** the insertion ramp (13) follows, from front to rear, a substantially rectilinear generatrix (LL').

4. Retaining device according to one of the preceding claims, **characterised in that** it has a substantially symmetrical form comprising two distant angle brackets (20, 21) disposed on either side of its sagittal plane and each provided with a first branch (22, 24) forming a fixing sole plate and a second branch (23, 25) secant to the first and forming an upright, the uprights (23, 25) having a bevelled form, the top (15) of which is situated towards the front and the broad base (26) towards the rear, said base having a re-entrant cutout (27) forming the groove (14) of the stop hook (11), said angle bracket being connected to each other by a cross member (28) that extends at least along the bevelled portion, fitting on top of the top edges of the uprights, so as to create between the latter an inclined bridge forming the insertion ramp (13).

5. Retaining device according to one of the preceding claims, **characterised in that** it is formed in a single piece obtained by stamping.

6. Vehicle (2), **characterised in that** at least one of its seats (3) is retained by a retaining device according to one of claims 1 to 5.

7. Vehicle according to claim 6, **characterised in that** the seat (3) retained by the retaining device (1) comprises a back rest (4) that is fixed to the bodywork (5) of the vehicle so as to provide, in line with said back rest, between the base of the latter and the floor (7) of the vehicle, an assembly gap in which the rear portion of the squab (6) is intended to come to be housed, and **in that** the insertion ramp is disposed at least partly vertically in line with the back rest, in said assembly gap.

8. Vehicle according to claim 6 or 7, **characterised in that** the retaining device (1) is fixed to the floor (7) of said vehicle so that the insertion ramp (13) is placed in upward projection from front to rear.

9. Vehicle according to one of claims 6 to 8, **characterised in that** the anchoring member (12) is formed by a reinforcement wire of the squab (6) situated in the rear portion of the latter.

10. Method for assembling a vehicle seat on the bodywork of said vehicle, during which an anchoring member (12) secured to the squab (6) of said seat is placed opposite a stop hook (11) previously fixed to the bodywork of the vehicle, so that said hook forms an obstacle to the accidental sliding of said squab towards the front, said method being **characterised in that** it comprises a preliminary positioning step (a) during which the squab of the seat is placed on the floor of the vehicle so as to position the anchoring member of the squab in contact with the start of an inclined insertion ramp (13) preceding the hook in the front/rear direction, and then a step (b) of guided insertion during which an insertion thrust is exerted on the squab along at least one horizontal component oriented from front to rear, so that said horizontal component simultaneously causes firstly the longitudinal progression of the squab from front to rear and secondly, by conversion of movement in contact with the insertion ramp, the gradual vertical movement of the anchoring member along said ramp, at a sufficient amplitude for said anchoring member to pass the hook and then to leave said insertion ramp, thus effecting a slip that causes it to be placed behind said hook, opposite the groove (14) of the latter, by snapping in.
